## Europäisches Patentamt

## European Patent Office

## Office européen des brevets

(19)

(11) Veröffentlichungsnummer: **0 157 380**
**B1**

(12) # EUROPÄISCHE PATENTSCHRIFT

(45) Veröffentlichungstag der Patentschrift:
13.09.89

(21) Anmeldenummer: **85103783.8**

(22) Anmeldetag: **29.03.85**

(51) Int. Cl.⁴: **B 60 N 3/00,** B 60 N 1/00,
B 68 G 5/02

(54) **Polsterkörper, insbesondere für Fahrzeuge.**

(30) Priorität: **03.04.84 DE 3412359**

(43) Veröffentlichungstag der Anmeldung:
**09.10.85 Patentblatt 85/41**

(45) Bekanntmachung des Hinweises auf die Patenterteilung:
**13.09.89 Patentblatt 89/37**

(84) Benannte Vertragsstaaten:
**DE FR GB IT SE**

(56) Entgegenhaltungen:
**DE-A-1 654 255**
**DE-A-1 685 179**
**DE-A-2 253 265**
**DE-C-2 645 463**
**DE-U-7 010 987**
**GB-A-1 177 122**

(73) Patentinhaber: **Gebr. Happich GmbH, Postfach 10 02 49 Clausenbrücke 1, D-5600 Wuppertal 1 (DE)**

(72) Erfinder: **Wolff, Martin, Felderbachstrasse 119 A, D-4320 Hattingen (DE)**
Erfinder: **Brüggemann, Armin, Birkenhöhe 2, D-5600 Wuppertal 1 (DE)**

EP 0 157 380 B1

## Beschreibung

Die Erfindung bezieht sich auf einen Polsterkörper, insbesondere für Fahrzeuge, mit einer formstabilen Einlage und mit einer die Einlage ganz oder bereichsweise durch Umschäumen umgebenden Polsterschicht aus weichem, elastischem Schaumkunststoff. (siehe z. B. DE-C-2 645 463).

Polsterkörper mit einer Einlage werden insbesondere in Fahrzeugen als Innenteile weitverbreitet verwendet, und zwar als Armaturentafeln, Handschuhkastendeckel, Prallkörper, Haltegriffe, Armlehnen, Armlehnen-Haltegriff-Kombinationen und ähnlichem.

An Polsterkörper der in Rede stehenden Art, wird oftmals die Anforderung gestellt, diese mit Bereichen unterschiedlichen Weichheitsgraden auszubilden. Ist beispielsweise im Armauflagebereich einer Armlehne eine Griffmulde integriert, so kommt es zu dem Widerspruch, daß die Armauflage möglichst weich, der Griffbereich der Griffmulde jedoch möglichst hart sein soll. Die Erfindung bezweckt, sich mit diesem Problem zu befassen und einen Polsterkörper zu schaffen, der den gestellten Anforderungen genügt.

Es ist demgemäß Aufgabe der Erfindung einen Polsterkörper der eingangs genannten Art durch einfache und kostengünstige Mittel derart zu verbessern und weiterzubilden, daß er eine Polsterschicht aufweist, die in vorgegebenen Zonen eine verminderte Weichheit aufweist bzw. in vorgegebenen Zonen härter als in den übrigen Bereichen ausgebildet ist.

Zur Lösung dieser Aufgabe ist erfindungsgemäß vorgesehen, daß an der Einlage zwecks Bildung einer bereichsweisen äußeren Randzonensteifigkeit des Polsterkörpers zumindest ein die Einlage ergänzender Auflagekörper in bereichsweiser Anordnung befestigt ist, der aus einem beim Umschäumen der Einlage vom Schaummaterial der Polsterschicht durchsetzbaren, porösem Material, vorzugsweise offenporigem Schaumkunststoff besteht.

Durch diese erfindungsgemäße Maßnahme können nunmehr Polsterkörper der angegebenen Art zur Verfügung gestellt werden, die den unterschiedlichen Anforderungen vollauf entsprechen, indem sie mit Bereichen der gewünschten Weichheit und mit Bereichen der gewünschten Härte ausgebildet sind. Der angestrebte und durch die erfindungsgemäße Maßnahme auch optimal erreichte Effekt ergibt sich dadurch, daß beim Umschäumen der Einlage, was in herkömmlicher Weise in einer Schäumform vorgenommen wird, das expandierende Schaummaterial, welches nach dem Schäumprozeß die Polsterschicht bildet, in die Poren der auf der Einlage angeordneten Auflage eindringt und hier aushärtet. Wenn nun an gezielten Bereichen der Einlage, vornehmlich an Randzonen der Polsterschicht benachbarten Bereichen der Einlage, eine oder mehrere Auflagen aus porösem Material, angeordnet werden, so ergibt sich in diesen bestimmten Bereichen auch die gewünschte Härte innerhalb der Polsterschicht.

Zusätzlich oder alternativ kann in Ausgestaltung der Erfindung die Auflage an der einer Anschlußwand zugewandten Seite der Einlage angeordnet sein. Hierdurch ergibt sich vorteilhafterweise eine Randzonensteifigkeit im Bereich der Anlagekontur des Polsterkörpers.

Die Auflage kann aus einem vorgeformten oder zugeschnittenen, auf die Einlage aufgeklebten offenporigen Schaumkunststoffkörper bestehen. Nach einem Alternativvorschlag kann aber auch vorgesehen sein, daß die aus offenporigem Schaumkunststoff bestehende Auflage unmittelbar auf die Einlage aufgeschäumt und an dieser durch Schaumhaftung befestigt ist. Es ist auch eine Kombination dieser beiden Maßnahmen denkbar, und zwar beispielsweise dann, wenn die Einlage an verschiedenen Stellen mit einer Auflage versehen werden soll, und wenn dies nur mit einer unverhältnismäßig komplizierten Schäumvorrichtung realisiert werden könnte.

Ausführungsbeispiele der Erfindung werden nachfolgend anhand der Zeichnung näher erläutert. Es zeigen:

Fig. 1    einen Polsterkörper in Form einer Armlehne mit integrierter Griffmulde und integriertem Haltegriff,

Fig. 2    einen Schnitt II - II nach Fig. 1 in vergrößertem Maßstab,

Fig. 3    einen Schnitt III - III nach Fig. 1 in vergrößertem Maßstab,

Fig. 4    einen Schnitt IV - IV nach Fig. 1 in vergrößertem Maßstab,

Fig. 5    einen als Armlehne mit Durchgriff ausgebildeten Polsterkörper

Fig. 6    einen Schnitt VI - VI nach Fig. 5 und

Fig. 7    einen vertikalen Teilschnitt durch einen als Armaturenbrett ausgebildeten Polsterkörper.

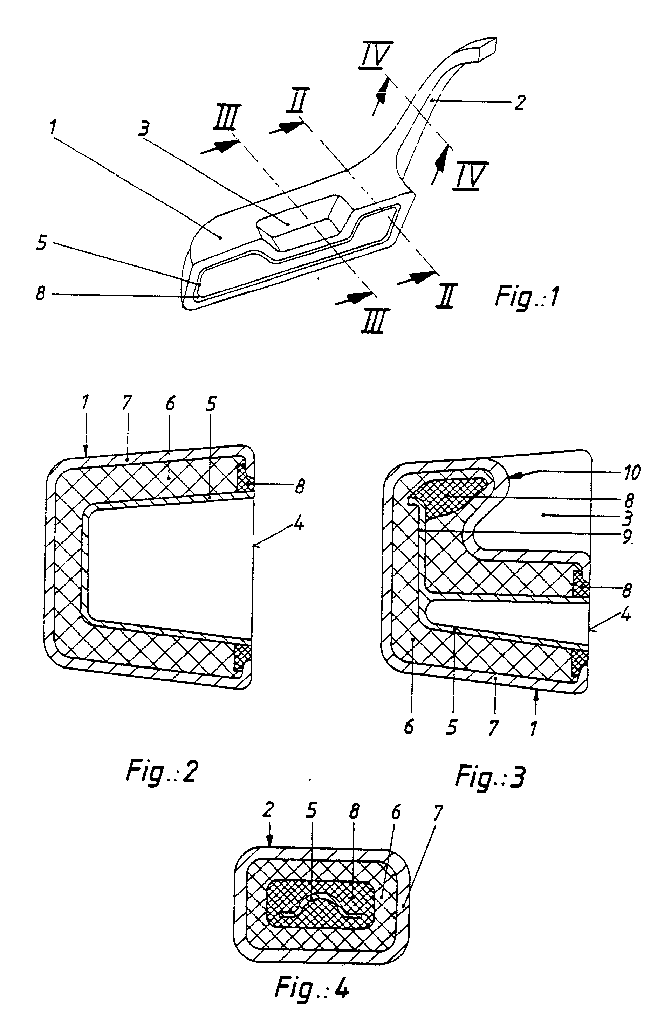

Der Polsterkörper nach Fig. 1 bis 4 umfaßt eine Armlehne 1 mit einem einstückig daran angeformten Haltegriff 2 und eine in der Armlehne 1 integrierte Griffmulde 3. Die Armlehne 1 besteht aus einer zur Anlagekontur 4 hin offen ausgebildeten Einlage 5, einer die Einlage 5 außenseitig umgebenden Polsterschicht 6 und einer die Polsterschicht außenseitig umgebenden Hüllfolie 7. Die Einlage 5 kann z. B. als tiefgezogener Blechkörper oder als Kunststoffspritzling ausgebildet sein. Die Polsterschicht 6 besteht aus weichem, elastischen Schaumkunststoff und die Hüllfolie 7 ist zweckmäßigerweise als Kunststoffhaut ausgebildet und im Blas- oder Rotationsverfahren hergestellt. Der Haltegriff 2 weist ebenfalls eine Einlage 5 auf, die, im Querschnitt gesehen, als Hutprofil ausgebildet und die, in nicht näher dargestellter Weise mit der Einlage 5 der Armlehne 1 verbunden ist. Die Polsterschicht 6 der Armlehne 1 setzt sich ebenso wie die Hüllfolie 7 der Armlehne 1 einstückig und materialeinheitlich bis zum freien Ende des Haltegriffes 2 fort.

Wie die Fig. 2 bis 4 zeigen, trägt die Einlage 5 in bereichsweiser Anordnung aus porösem Material vorzugsweise offenporigem Schaumkunststoff bestehende Auflagen 8. Eine Auflage 8 kann, wie Fig. 2 zeigt, am auflageseitigen Randzonenbereich der Einlage 5 angeordnet sein. Gemäß Fig. 3 ist eine erste Auflage 8 entsprechend Fig. 2 im Bereich der Anlagekontur 4 und eine zweite Auflage 8 am Endbereich eines Steges 9 der Einlage 5 angeordnet, wobei der Steg 9 zum Griffbereich 10 der Griffmulde 3 hin ausgerichtet und die Auflage 8 an der dem Griffbereich 10 zugewandten Seite des Steges 9 angeordnet ist. Die Auflage 8 kann auch, wie in Fig. 4 gezeigt, die Einlage 5, zumindest in Teilbereichen, völlig umschließen.

Bei der Herstellung eines Polsterkörpers der in Fig. 1 bis 4 gezeigten Art wird in herkömmlicher Weise die Einlage 5 und die Hüllfolie 7 gefertigt. Alsdann wird die Einlage 5, wie in den Fig. 2 bis 4 beispielhaft dargestellt, mit einer oder mehreren Auflagen 8 versehen, was durch Zuschneiden von offenporigen Schaumkunststoffkörpern und Aufkleben derselben auf die Einlage 5 oder durch partielles Umschäumen der Einlage 5 mit offenporigem Schaumkunststoffmaterial bewerkstelligt werden kann. Die so vorbereitete Einlage 5 wird dann in die Hüllfolie 7 eingefädelt und zusammen mit dieser in das Formnest einer nicht dargestellten Schäumform eingelegt und hiernach der Raum zwischen Einlage 5 und Hüllfolie 7 in herkömmlicher Weise ausgeschäumt. Beim Schäumvorgang diffundiert dann ein Teil des Schaummaterials in die offenporigen Auflagen 8 und härtet hiernach innerhalb der offenen Poren mit der Folge einer gewünschten Randzonensteifigkeit aus. Damit ist es durch die Erfindung gelungen in einem Polsterkörper definiert weichere und härtere Sektionen zu erreichen.

In bezug auf die Anordnung der Auflage 8 im Bereich der Anlagekontur 4 (vgl. Fig. 2 und 3) ergibt sich noch ein fertigungstechnischer Vorteil insofern, als hierdurch zum einen ermöglicht wird, daß die beim Schäumvorgang verdrängte Luft durch die offenporige Auflage 8 entweichen kann, daß aber zum anderen verhindert wird, daß Schaummaterial aus der Anlagekontur 4 heraustreten kann.

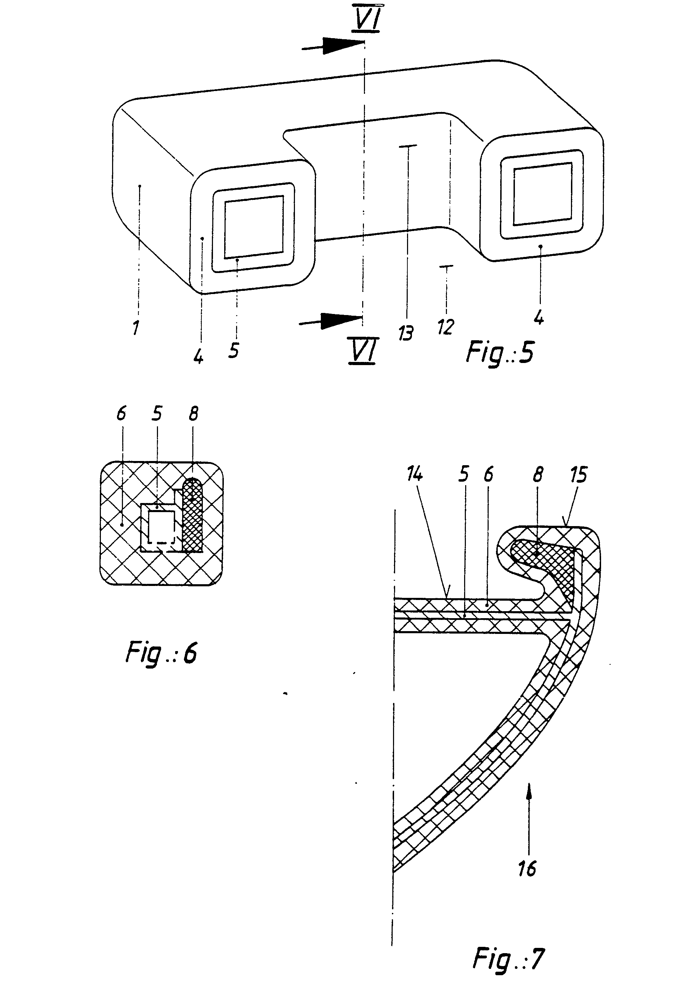

In Fig. 5 und 6 ist ein Polsterkörper gezeigt, der als Armlehne 1 mit Durchgriff 12 ausgebildet ist. Die Armlehne 1 weist eine in der Polsterschicht 6, die hier aus einem Kunststoffschaum mit selbstbildender Haut besteht, eingelagerte Einlage 5 auf, die als von Anlagekontur 4 bis Anlagekontur 4 durchgehender Hohlkörper ausgebildet ist. Ein solcher Polsterkörper wird üblicherweise an einer Fahrzeugtür angeordnet und dient hier als Armauflage und gleichermaßen als Zuziehgriff. Bei einem Zuziehgriff ist es erwünscht, daß die Fingeranlageflächen 13 einen möglichst harten Anfühlcharakter aufweisen. Um dies zu erreichen, ist auf der der Fläche 13 zugewandten Seite der Einlage 5 eine bandförmige Auflage 8 aus offenporigem Schaummaterial angeordnet, in die das Schaummaterial beim Schäumen der Polsterschicht 6 diffundiert. Nach dem Aushärten des Schaummaterials ergibt sich dann im Bereich der Anlagefläche 13 die gewünschte Härte oder Randzonensteifigkeit. Es ist selbstverständlich gewünschtenfalls möglich, auch die Anlagekonturen 4 beim Polsterkörper gemäß Fig. 5 in der anhand von Fig. 2 erläuterten Weise zu versteifen.

In Fig. 7 schließlich, ist ein Teilbereich eines Polsterkörpers in Form einer Fahrzeugarmaturentafel 16 dargestellt, die eine Ablagefläche 14 und eine diese nach außen begrenzende und hinterschnitten ausgebildete Griffleiste 15 aufweist. Die Armaturentafel 16 weist eine Polsterschicht 6 aus weichem, elastischem Material auf, die durch eine eingelagerte Einlage 5 ausgesteift ist. Im Bereich der Griffleiste 15 trägt, die auch hier vorhandene Einlage 5 eine Auflage 8 aus offenporigem Schaumkunststoff, die in der vorbeschriebenen Weise dazu dient, die Polsterschicht 6 im rückwärtigen Bereich der Griffleiste 15 auszusteifen bzw. härter als in den übrigen Bereichen auszubilden.

## Patentansprüche

1. Polsterkörper, insbesondere für Fahrzeuge, mit einer formstabilen Einlage (5) und mit einer die Einlage (5) ganz oder bereichsweise durch Umschäumen umgebenden Polsterschicht (6) aus weichem, elastischen Schaumkunststoff, dadurch gekennzeichnet, daß an der Einlage (5) zwecks Bildung einer bereichsweisen äußeren Randzonensteifigkeit des Polsterkörpers zumindest ein die Einlage (5) ergänzender Auflagekörper (8) in bereichsweiser Anordnung befestigt ist, der aus einem beim Umschäumen der Einlage (5) vom Schaummaterial der Polsterschicht (6) durchsetzbaren, porösen Material, vorzugsweise offenporigem Schaumkunststoff besteht.

2. Polsterkörper nach Anspruch 1, dadurch gekennzeichnet, daß die Auflage (8) an Randzonen der Polsterschicht (6) benachbarten Bereichen der Einlage (5) angeordnet ist.

3. Polsterkörper nach Anspruch 1 oder 2, dadurch gekennzeichnet, daß die Auflage (8) an der einer Anschlußwand zugewandten Seite der Einlage (5) angeordnet ist.

4. Polsterkörper nach einem oder mehreren der Ansprüche 1 bis 3, dadurch gekennzeichnet, daß die Auflage (8) aus einem vorgeformten oder zugeschnittenen, auf die Einlage (5) aufgeklebten offenporigen Schaumkunststoffkörper besteht.

5. Polsterkörper nach einem oder mehreren der Ansprüche 1 bis 3, dadurch gekennzeichnet, daß die aus offenporigem Schaumkunststoff bestehende Auflage (8) unmittelbar auf die Einlage (5) aufgeschäumt und an dieser durch Schaumhaftung befestigt ist.

## Claims

1. A padded body, especially for a vehicle, the body comprising a stable insert (5) and a padded layer (6) of a soft and elastic plastics foam material which, as a result of being foamed around the insert (5), encloses it entirely or areal parts thereof, characterized in that at least one overlay (8) supplementing the insert (5) is fastened to an areal part thereof and serves to create rigidity in an outer zone of an areal part of the padded body, and in that the or each overlay is made of a porous material, preferably an open-pore plastics foam material, permeable by the padded layer's (6) foam material when the latter is foamed around the insert (5).

2. A padded body according to claim 1, characterized in that the overlay (8) is, or the overlays are, arranged in an areal part, or parts, of the insert (5) adjoining an edge zone, or zones, of the padded layer (6).

3. A padded body according to claim 1 or claim 2, characterized in that the overlay (8) is arranged on a side of the insert (5) adapted to face a mounting wall.

4. A padded body according to any one or more of the claims 1 to 3, characterized in that the or each overlay (8) is a preformed or cut-to-size article of an open-pore plastics foam material glued to the insert (5).

5. A padded body according to any one or more of the claims 1 to 3, characterized in that the or each overlay (8) made of an open-pore plastics foam material is foamed directly on to the insert (5) and fastened thereto by the foam's adhesiveness.

## Revendications

1. Elément rembourré, notamment pour véhicules, comportant un insert (5) de forme stable et une couche rembourrée (6) en matériau cellulaire souple élastique, expansée en totalité ou par zones autour de l'insert (5), caractérisé en ce qu'on fixe sur l'insert (5), pour obtenir une rigidité extérieure par zones de l'élément rembourré, au moins un élément de garniture (8) disposé par zones et complétant l'insert (5), laquelle garniture est constituée par un matériau poreux, de préférence un matériau cellulaire à pores ouverts pouvant être traversé par le matériau cellulaire de la couche rembourrée (6) lors de l'expansion autour de l'insert (5).

2. Elément rembourré selon le revendication 1, caractérisé en ce que la garniture (8) est disposée sur des zones de l'insert (5) voisines des zones de bord de la couche rembourrée (6).

3. Elément rembourré selon la revendication 1 ou 2, caractérisé en ce que la garniture (8) est disposée sur le côté de l'insert (5) tourné vers une paroi de raccordement.

4. Elément rembourré selon l'une ou plusieurs des revendications 1 à 3, caractérisé en ce que la garniture (8) est constituée par un élément en matériau cellulaire à pores ouverts préformé ou coupé à mesure, collé sur l'insert (5).

5. Elément rembourré selon l'une ou plusieurs des revendications 1 à 3, caractérisé en ce que la garniture (8), constituée par un matériau cellulaire à pores ouverts, est expansée directement sur l'insert (5) et collée à celui-ci par l'adhérence de la mousse.

EP 0 157 380 B1

Fig.:1

Fig.:2

Fig.:3

Fig.:4

1

Fig.: 5

Fig.: 6

Fig.: 7